(19) Europäisches Patentamt
European Patent Office
Office européen des brevets

(11) **EP 2 367 311 A2**

(12) **EUROPEAN PATENT APPLICATION**

(43) Date of publication:
**21.09.2011 Bulletin 2011/38**

(51) Int Cl.:
***H04J 3/06*** *(2006.01)*

(21) Application number: **11155247.7**

(22) Date of filing: **21.02.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.03.2010 JP 2010061165**

(71) Applicant: **FUJITSU LIMITED**
**Kawasaki-shi,**
**Kanagawa 211-8588 (JP)**

(72) Inventor: **Hirata, Shuya**
**Kawasaki-shi Kanagawa 211-8588 (JP)**

(74) Representative: **Holz, Ulrike**
**Haseltine Lake LLP**
**Lincoln House, 5th Floor**
**300 High Holborn**
**London WC1V 7JH (GB)**

(54) **Controlling apparatus and controlling method of a wireless device, and base station apparatus**

(57)     A controlling apparatus installed in a base station with a plurality of wireless devices, for controlling operations of the plurality of wireless devices. The controlling apparatus includes an interface device for transmitting and receiving data with at least one of the plurality of wireless devices according to timing provided by an internal clock, a measurement device for measuring the delay times corresponding to the transmission and the reception of the data between the interface device and the plurality of wireless devices, and a correction device for correcting a difference of the delay times corresponding to the plurality of wireless devices by changing the internal clock.

FIG. 1

## Description

### Technical Field

The present invention relates to a controlling apparatus and method for controlling wireless devices, and a base station apparatus provided with a wireless device and a controlling apparatus, such as controlling apparatus and method for controlling delay correction in the wireless device.

### Background Art

As wireless communication method in this kind of wireless devices, 3G system using CDMA (Code Division Multiplex Access) is presently used as mainstream method. On the other hand, preparation for a transition to LTE (Long Term Evolution) system using OFDM (Orthogonal Frequency Division Multiplex) is advancing now.

In Addition, the discussion of application of MBMS(Multimedia Broadcast and Multicast Service) as the standard is advancing. When providing a service by using MBMS, to avoid the instantaneous interruption between cells, the same information is transmitted by using the same frequency from each cells. In this case, it is preferable to avoid interference in the cell edge to continue communicating when the wireless device moves to another cell. By this, it is preferable that the error margin of the transmission timing in each cell is as small as possible.

On the other hand, the base station for wireless communication commonly applies the construction separated into the wireless devices (RE: Radio Equipments) and a controlling apparatus (REC: Radio Equipment Controller) for the purpose of reducing a cable loss from an output terminal to an antenna and improving an installation clearance. Moreover, the base station commonly provides with CPRI(Common Public Radio Interface) as the interface between the wireless device and the controlling apparatus.

There is a difference at the transmission delay time between the wireless device and the controlling apparatus because of the difference of length of the optical cable when the wireless device and the controlling apparatus are connected with the optical cable by using CPRI. On the other hand, in the base station, because it is demanded to arrange the timing of the wireless device output, the delay time based on the difference of the length of the optical cable is corrected. There are some prior art documents which explain the technology concerning the measurement and the correction of the delay time.

Patent Document 1: Japanese Patent Application Laid Open No. 2007-507957 Non-Patent Document 1: CPRI Specification V4.0 (4.2.9, and 6.1)

## Disclosure of Invention

### Subject to be Solved by the Invention

When the correction of the delay time is performed, for example by changing the timing of a basic frame of CPRI for instance as explained above, a technical problem that LOS(Lost of Signal) happens between the wireless device and the controlling apparatus arises. The technical problem of LOS mentioned above can be resolved by performing the correction in a I/Q data device. However, the I/Q data device can correct the delay time only by the unit of sampling at a minimum. By this, another problem that the error margin below the sampling unit remains arises. In addition, the delay time between the wireless device and the controlling apparatus constantly changes because of changes in temperature of the optical cable or the delay variation in a transponder. By this, the correction of the delay time should be performed constantly, but the correction by the unit of sampling causes the instantaneous interruption of the connection.

According to an aspect of the embodiment, a controlling apparatus installed in a base station with a plurality of wireless devices, for controlling operations of the plurality of wireless devices. The controlling apparatus includes an interface device for transmitting and receiving data with at least one of the plurality of wireless devices according to timing provided by an internal clock, a measurement device for measuring the delay times corresponding to the transmission and the reception of the data between the interface device and the plurality of wireless devices, and a correction device for correcting a difference of the delay times corresponding to the plurality of wireless devices by changing the internal clock.

The interface device transmits and receives data between the wireless device and the controlling apparatus based on an internal clock, such as clock signals generated by a the clock generator installed in the controlling apparatus. In this case, the interface device connects between the wireless device and the controlling apparatus by an optical cable for instance, and transmits and receives data through the optical cable. Moreover, in order to transmit and receive of data between a plurality of wireless devices and one or more controlling devices corresponding to the plurality of wireless devices, a plurality of interface devices may be provided.

The measurement device measures delay times corresponding to the transmitting or the receiving of the data between the interface device and each of the plurality of wireless devices.

The correction device changes the delay time corresponding to the transmitting or the receiving of the data in the interface device by changing the internal clock in the interface device. In this case, the correction device changes the delay times of data in each interface device to correct the delay times measured by the measurement device. In other words, the correction device changes the delay times in order to synchronize the output timing or the input timing of the data in each wireless device. As a result of the correction, the correction device can correct the difference at the delay times corresponding to each of the plurality of wireless devices, such as the difference between the delay time of one wireless device and delay time of another wireless device.

According to an aspect of the embodiment, a controlling apparatus method includes measuring the delay times corresponding to transmission and reception of the data between a interface device for transmitting and receiving data with at least one of the plurality of wireless devices according to timing provided by an internal clock and the plurality of wireless devices, and correcting a difference of the delay times corresponding to the plurality of wireless devices by changing the internal clock.

According to an aspect of the embodiment a base station provided with a plurality of wireless devices and the above-mentioned controlling apparatus for controlling operations of the plurality of wireless devices.

According to an aspect of the controlling apparatus, the controlling method and the base station, the delay times corresponding to the transmitting or the receiving of the data in each of the plurality of the wireless devices can be corrected with high speed and high accuracy. Moreover, because the various process relating to the correction of the delay times is performed internally in the controlling apparatus, the complication of the sequence for the transmitting and receiving of the data can be suppressed.

Brief Description of Diagrams

[FIG. 1] FIG. 1 is a configuration diagram illustrating the basic structure of a base station including wireless devices and a controlling device.
[FIG. 2] FIG. 2 is a sequence diagram illustrating operations of devices included in the base station.
[FIG. 3] FIG. 3 is a configuration diagram illustrating the structure of a CPRI frame.
[FIG. 4] FIG. 4 is a diagram illustrating measurement points of delay times in RE and REC.
[FIG. 5] FIG. 5 is a diagram illustrating relationship of frame timings measured in the measurement points.
[FIG. 6] FIG. 6 is a diagram illustrating frame timings of downlink signals.
[FIG. 7] FIG. 7 is a diagram illustrating frame timings of uplink signals.
[FIG. 8] FIG. 8 is a flowchart illustrating a flow of a measurement process of the delay times.
[FIG. 9] FIG. 9 is a flowchart illustrating a flow of a calculating process of the correction value of the delay times.
[FIG. 10] FIG. 10 is a flowchart illustrating a flow of an example of a correcting process of the delay times of the downlink signals.
[FIG. 11] FIG. 11 is a configuration diagram illustrating the structure of a clock controller and neighboring devices.
[FIG. 12] FIG. 12 is a flowchart illustrating a flow of a timing adjustment process performed by a clock delaying device.
[FIG. 13] FIG. 13 is a diagram illustrating relationship of frame timings of the downlink signals with the delay times corrected.
[FIG. 14] FIG. 14 is a diagram illustrating relationship of frame timings of the uplink signals with the delay times corrected.
[FIG. 15] FIG. 15 is a configuration diagram illustrating an example of the structure of a controlling apparatus of a second embodiment, which is provided with a delay controlling buffer.
[FIG. 16] FIG. 16 is a diagram illustrating the structure of the delay controlling buffer memory and the buffering process performed by the delay controlling buffer.
[FIG. 17] FIG. 17 is a configuration diagram illustrating an example of the structure of a controlling apparatus of a third embodiment.
[FIG. 18] FIG. 18 is a diagram illustrating an example of process of changing an adjusting the width of the correction for delay times correction.

Description of Reference Codes

1 base station

RE(1) ... RE(n) wireless device

REC controlling device

100(1) ... 100(n) REC side interface device

101 framer

102 clock controller

103 uplink signal processor

104 delay time measurement device

105 downlink signal processor

106 IF (interface) controller

107 uplink delay corrector

108 downlink delay corrector

109 O/E (optical / electrical) convertor

110 base station controller

120 baseband signal processor

130 line terminator

140 clock generator

200 RE side interface device

201 framer

202 uplink signal processor

203 downlink signal processor

204 IF (interface) controller

205 memory

210 transmission amplifier

220 antenna

Best Mode for Carrying Out the Invention

Hereinafter, the embodiments will be explained with reference to the drawings.

(1) First Embodiment

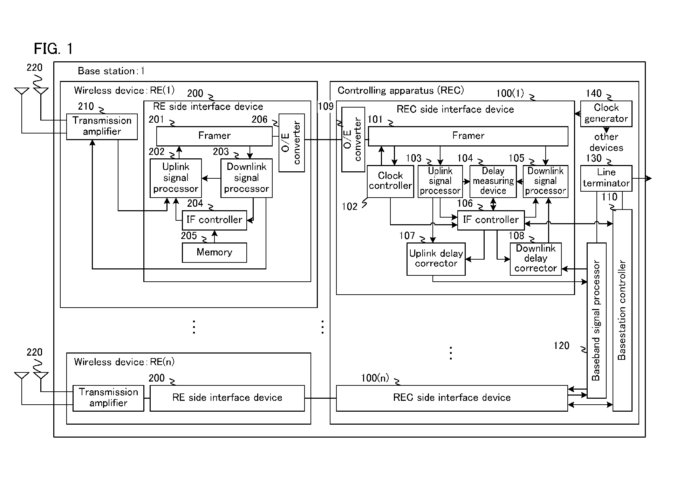

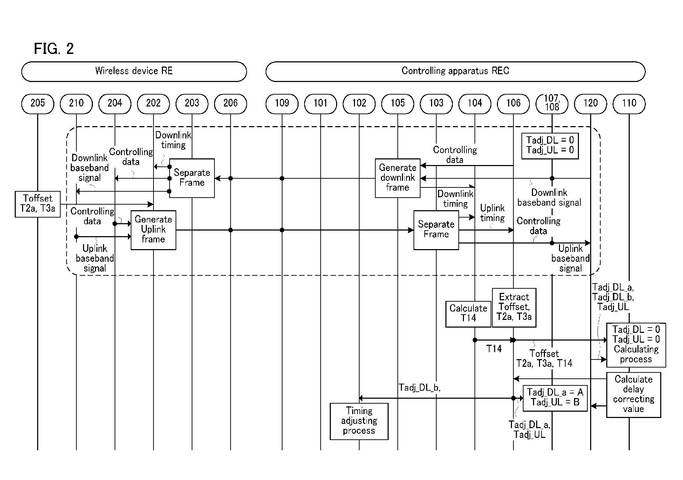

Firstly, with reference to FIG. 1 and FIG. 2, a basic structure of a base station of a first embodiment will be explained. FIG 1. is a configuration diagram illustrating the basic structure of a base station including wireless devices and a controlling device. FIG 2. is a sequence diagram illustrating operations of devices included in the base station.FIG. 1 is a block diagram conceptually showing the basic structure of the recording / reproducing apparatus in the example.

As illustrated in FIG. 1, a base station 1 is provide with a controlling apparatus REC and a plurality of wireless devices RE(1) ... RE(n).

The controlling apparatus REC is provided with a plurality of REC side interface devices 100(1) ... (n), a base station controller 110, a baseband signal processor 120, a line terminator 130, and a clock generator 140.

Each of the REC side interface devices 100 (1) ... 100(n) is connected to a RE side interface device 200 included in corresponding one of the wireless devices RE(1) ... (n) respectively by optical cables. The base station controller 110 manages the entire operation of the controlling apparatus REC and a plurality of wireless devices RE(1) ... RE (n).

The baseband signal processor 120 divides line data supplied by the line terminator 130 into each of the plurality of REC side interface devices 100(1) ... 100 (n) and supplies the data as downlink baseband signals.

Moreover, the baseband signal processor 120 extract the line data from uplink baseband signals supplied by the plurality of REC side interface devices 100(1) ... 100 (n), and supplies them to the line terminator 130. The line terminator 130 is connected with higher-level devices such as base station managing devices.

The clock generator 140 generates clock signals and supplies standard timing of the device based on the clock signals to the plurality of REC side interface devices 100(1) ... 100(n).

Each of the plurality of wireless devices RE (1) ... RE (100) is provided with the RE side interface device 200, a transmission amplifier 210, and an antenna 220.

The RE side interface device 200 is connected to corresponding one of the REC side interface devices 100(1)... 100(n) respectively by optical cables. The transmission amplifier 210 amplifies the uplink signals received with the antenna 220 and supplies them to RE side interface device 200. Moreover, the transmission amplifier 210 amplifies the downlink signals supplied from RE side interface device 200 and transmits them through the antenna 220.

Hereinafter, the delay correction value of downlink signals in a downlink delay corrector 108 is described as Tadj_DL, and the delay correction value of uplink signals in a uplink delay corrector 107 is described as Tadj_UL.

Moreover, an initial value of Tadj_DL and Tadj_UL before the calculation of the delay correction value described below is performed is assumed to be 0 respectively.

A downlink signal processor 105 installed in the interface device of REC such as the interface device 100 (1) synthesizes controlling data generated by a Interface (IF) controller 106 of the interface device 100(1) and the downlink baseband signals sent from the baseband signal processor 120, at the timing according to the internal standard timing. By this, the downlink signal processor 105 generates downlink CPRI frames and outputs. In this case, so-called sync bytes are periodically included in control words of the CPRI frames. Because such sync bytes are transmitted periodically by using the control words, the controlling apparatus REC and the plurality of wireless devices RE(1) ... RE (n) can synchronize their timing each other. In addition, downlink signal processor 105 notifies the transmission timing of a synchronous byte to a delay measuring device 104.

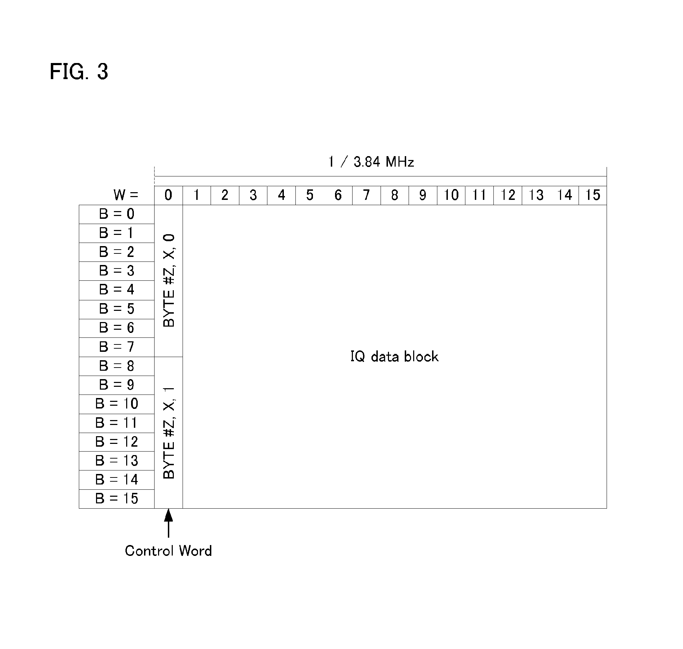

The structure of the CPRI frame will be explained with reference to FIG. 3. FIG. 3 is a configuration diagram illustrating the structure of a CPRI frame, in case of the line bit rate is 2457.6 Mbps. In this case, the frame length is 1 chip(= 260.42ns = 1/3.84MHz), and the frame includes the control word for transmitting and receiving the control data and IQ data block for transmitting and receiving the baseband signals.

The downlink CPRI frames output by the downlink signal processor 105 are transmitted to the wireless device RE(1) by the optical cable through a framer 101 and an O/E (Optic/Electric) converter 109 of the controlling apparatus REC.

The downlink CPRI frames transmitted to the wireless device RE(1) are supplied to a downlink signal processor 203 through an O/E converter 206 and a framer 201 in the RE side interface device 200. The downlink signal processor 203 separates the supplied downlink CPRI frame into the controlling data and the downlink baseband signals. Moreover, the downlink signal processor 203 detects the timing in which the CPRI frame is received, and sends the timing signal to the uplink signal processor 202.

The uplink signal processor 202 generates uplink CPRI frames by synthesizing the control data generated in the IF controller 204 in the RE side interface device 200 and the uplink baseband signals sent from the transmission amplifier 210. Then the uplink signal processor 202 output the generated uplink CPRI frames. In this case, uplink CPRI frame is output based on the timing signal that shows the CPRI frame reception timing notified from the downlink signal processor 203. The uplink signal processor 202 transmits the controlling data including fixed delay times Toffset, T2a and T3a stored in memory 205 beforehand. Information of delay times may be included in the plurality of the CPRI frames in case of the information cannot be included in the single CPRI frame.

The uplink CPRI frames output from the uplink signal processor 202 are transmitted to the REC side interface device 100(1) through the framer 201 and the O/E converter 206 in RE side interface device 200 of wireless device RE(1).

The uplink CPRI frames transmitted to the REC side interface device 100(1) are supplied to the uplink signal processor 103 through the O/E converter 109 and the framer 101. The uplink signal processor 103 separates the supplied uplink CPRI frame into the controlling data and the uplink baseband signals. Then, the uplink signal processor 103 sends the controlling data to the IF controller 106 in the REC side interface device 100(1) and the uplink baseband signals to the baseband signal processor 120. As mentioned above, the controlling data includes the information of the delay times Toffset, T2a and T3a by the operation of the uplink signal processor 202 of the wireless device RE(1). Moreover, uplink signal processor 103 extracts reception timing of the uplink CPRI frames, and notifies it to the delay measuring device 104. The relationship of the delay times will be explained with the example of the delay measurement process.

In FIG. 2, the part enclosed in the short dashed line shows a process corresponding to the single CPRI frame. Because the plurality of CPRI frames is processed constantly, the control data may be transmitted by being included in the two or more different CPRI frames. The timing signals may transmitted periodically.

The delay measuring device 104 measures delay time T14 according to the transmission timing notified from the downlink signal processor 105 and the reception timing extracted by the uplink signal processor 103, and notifies the result of the measurement to the IF controller 106. The IF controller 106 receives the delay time T14 from the delay measuring device 104 and the delay times Toffset, T2a and T3a included in the control data and sends them to the base station controller 110.

Such processes is performed by each of the plurality of the wireless devices. As a result, the base station controller 110 receives the delay times T14, Toffset, T2a and T3a for each wireless device RE(1) ... RE(n). The base station controller 110 calculates downlink delay time Tdelay_DL and uplink delay time Tdelay_UL by using these information. In addition, the base station controller 110 calculates downlink delay correction value Tadj_DL and uplink delay correction value Tadj_UL.

As explained above, the delay times and the delay correction values are calculated for each wireless device RE(1) ... RE(n). Hereinafter, the delay times T14, Toffset, T2a, T3a, and T34 are described by adding the number of the corresponding wireless device RE, like T14(1), Toffset(1), T2a(1), T3a(1) and T34(1) for the wireless device RE(1). Similarly, the delay time Tdelay_DL and Tdelay_UL, and the delay correction value Tadj_DL and Tadj_UL is described like Tdeiay_DL(1), Tdelay_UL (1), Tadj_DL(1), and Tadj_UL(1) for the corresponding wireless device RE(1). A detailed definition of the delay times and the delay correction values will be explained lately.

(2)Example of the delay measurement process

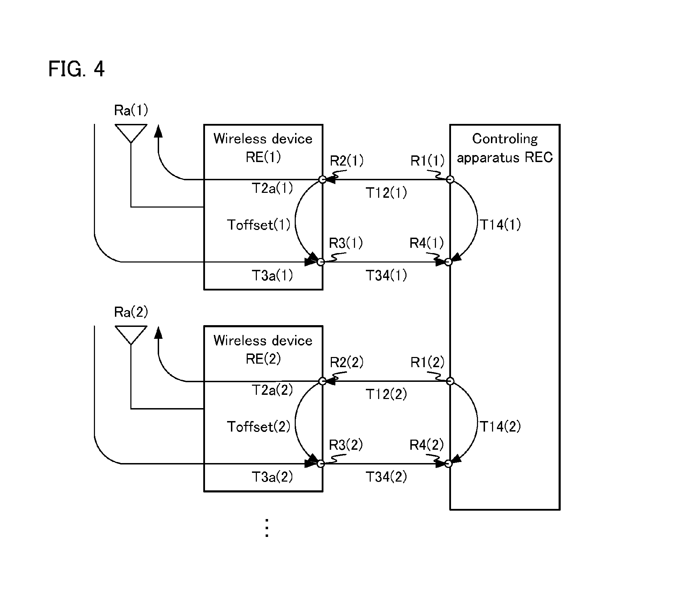

With reference to FIG. 4 to FIG.8, an example of the delay measurement process of the first embodiment will be explained.

Firstly, with reference to FIG. 4, the definition of the measurement points of the delay times of the embodiment will be explained. The measurement points R1, R2, R3, R4 and Ra are defined as illustrated in FIG. 4, for performing the measurement of the delay times in the base station 1. R1 is defined as an output terminal of the controlling apparatus REC. R4 is defined as an input terminal of the controlling apparatus REC. R2 is defined as a CPRI interface side input terminal of the wireless device RE. R3 is defined as a CPRI interface side output terminal of the wireless device RE. Ra is defined as an input and output terminal of the antenna 220. Above mentioned delay times such as T14, T12, Toffset, T34, T2a, and T3a are defined as the delay times between these measurement points. T14 is defined as a difference of time between the CPRI frame timing output from the REC output terminal R1 and the CPRI frame timing input to the REC input terminal R4. T12 is defined as a delay time from the REC output terminal R1 to the RE input terminal R2. Toffset is defined as a delay time of the frame timing from inputting to the RE output terminal R3 to outputting to the REC output terminal R4. T34 is defined as a delay time from the RE output terminal R3 to the REC input terminal R4. T2a is defined as a delay time of the baseband signal from inputting to the RE input terminal R2 to outputting to the antenna Ra. T3a is defined as a delay time between the input of the input signal to the antenna Ra and the output of the input signal to RE output terminal R3.

As illustrated in FIG. 4, the measurement points and the delay times are described by adding an identification number of the corresponding wireless devices. For example, the measurement points and the delay times corresponding to the wireless device RE(1) are described by adding an number (1), and the measurement points and the delay times corresponding to the wireless device RE(2) are described by adding an number (2).

Values of the delay times T12 and T34 vary with the length of the cable such as an optical cable in the CPRI interface. On the other hand, the delay time Toffset may be treated as a fixed value because the Toffset is a internal delay time determined by the wireless device RE.

The delay times T2a and T3a are respectively represent sum of the delay times of the transmission in the RE and in antenna cables. The delay times of the transmission in antenna cables may be treated as errors because the length of the antenna cables is commonly short enough. Moreover, the delay times of the transmission in antenna cables can be estimated according to the cable length, the delay time may be treated as a fixed value.

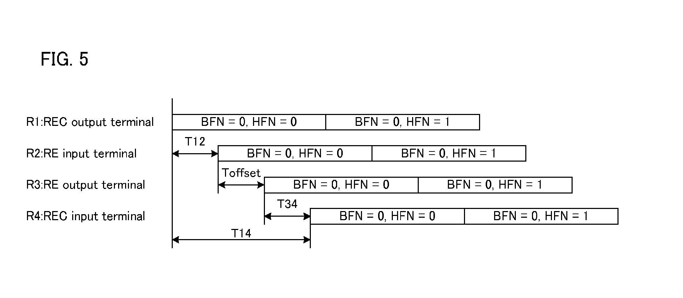

With reference to FIG. 5, relationship among CPRI frame timings of the measurement points of the delay times illustrated in FIG. 4 will be explained in detail. The CPRI frame output from REC output terminal R1 is received by the RE input terminal R2 after delay of T12. The wireless device RE generates the uplink CPRI frame according to the received CPRI frame timing and output the generated uplink CPRI frame through the RE output terminal R3. In this process, an internal delay Toffset arises. The CPRI frame output from RE output terminal R3 is received by the REC input terminal R4 after delay of T34. As illustrated in FIG. 5, the difference of time T14 from the time in which the CPRI frame is output from the REC output terminal R1 to the time in which the CPRI frame is received by the REC input terminal R4 can be represented as a sum of the delay times T12+Toffset+T34.

Since the delay time T14 a difference of time between the CPRI frame timing output from the REC output terminal R1 and CPRI frame timing input to the REC input terminal R4, the delay time T14 can be measured by the controlling apparatus REC. Moreover, since the delay time Toffset can be treated as a fixed value, as mentioned above, the controlling apparatus REC can easily gain the value of Toffset by storing the value preliminarily.

The same cable such as coaxial optical cable for interactive communication is typically used for transmitting the downlink CPRI frames and the uplink CPRI frames. By this, the delay time T12 can be considered to be equal to the delay time T34.

$$T12 = T34 = (T14 - Toffset)/2$$

Therefore, the relation between the delay time T12, T34, T34 and Toffset can be expressed as shown in an equation below.

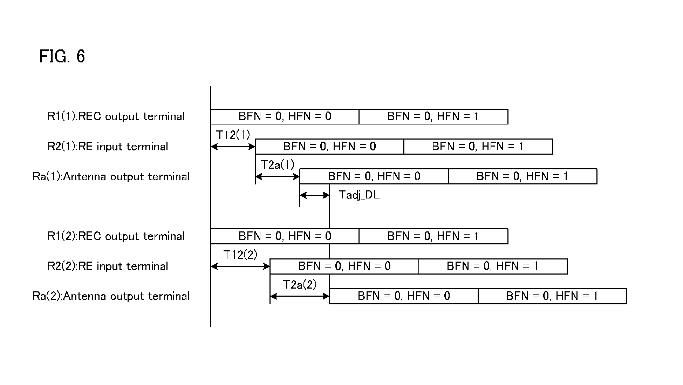

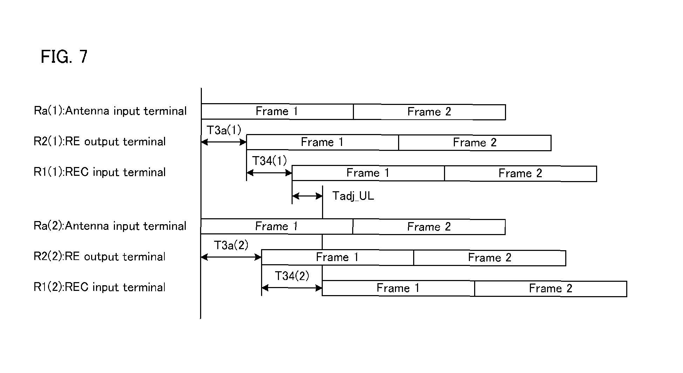

With reference to FIG. 6 and FIG. 7, the difference of time between one wireless device RE(1) and another wireless device RE(2) will be explained.

FIG. 6 is a diagram illustrating frame timings of downlink signals of the wireless device RE(1) and RE(2). When the controlling apparatus REC transmits the CPRI frames to the wireless device RE(1) and RE(2) simultaneously, the wireless device RE(1) receives the CPRI frame sent for the wireless device RE(1) after delay of T12(1). The antenna 220 of the wireless device RE(1) outputs the downlink baseband signal included in the CPRI frame after delay of T2a(1). On the other hand, the wireless device RE(1) receives the CPRI frame sent for the wireless device RE(2) from the controlling apparatus after delay of T12(2). The antenna 220 of the wireless device RE(2) outputs the downlink baseband signal included in the CPRI frame after delay of T2a(2). Assuming the delay time between the transmission of the CPRI frame from the controlling apparatus REC and the output of the downlink baseband signal included in the CPRI frame through the antenna as Tdelay_DL, the delay time Tdelay_DL can be expressed in an equation below.

$$Tdelay\_DL = T12 + T2a$$

Because of the difference in the delay times of each wireless device, there is time difference of Tadj_DL between the frame timing at the antenna output terminal Ra(1) of the wireless device RE(1) and the frame timing at the antenna output terminal Ra(2) of the wireless device RE(2). In other words, the baseband signals included in the CPRI frames transmitted from the controlling apparatus simultaneously output from the antenna output terminal of the respective wireless devices by the time difference of Tadj_DL.

FIG. 7 is a diagram illustrating frame timings of uplink signals of the wireless device RE(1) and RE(2). The radio signal received by the antenna of the wireless device RE(1) delays T3a(1) and T34(1). On the other hand, the radio signal received by the antenna of the wireless device RE(2) delays T3a(2) and T34(2).

$$Tdelay\_UL = T3a + T34$$

Assuming the delay time between the reception of the radio signal by the antenna of the wireless device and the input of the signal to the controlling apparatus as Tdelay_UL, the delay time Tdelay_UL can be expressed in an equation below.

Because of the difference in the delay times of each wireless device, the radio signals received by the wireless devices RE(1) and RE(2) have the time difference of Tadj_UL at the input terminal of the controlling apparatus.

The base station device 1 of the first embodiment can arrange the transmission timing in each cell by correcting the difference in the measured delay timing between the wireless device RE(1) and the wireless device RE(2).

Moreover, in case that the base station 1 is provided with three or more wireless devices, the controlling apparatus can arrange the differences among the delay timing of each of the wireless devices. In this case, for example, the controlling apparatus may correct the difference in the delay timings by assuming delay time corresponding to one wireless device as standard.

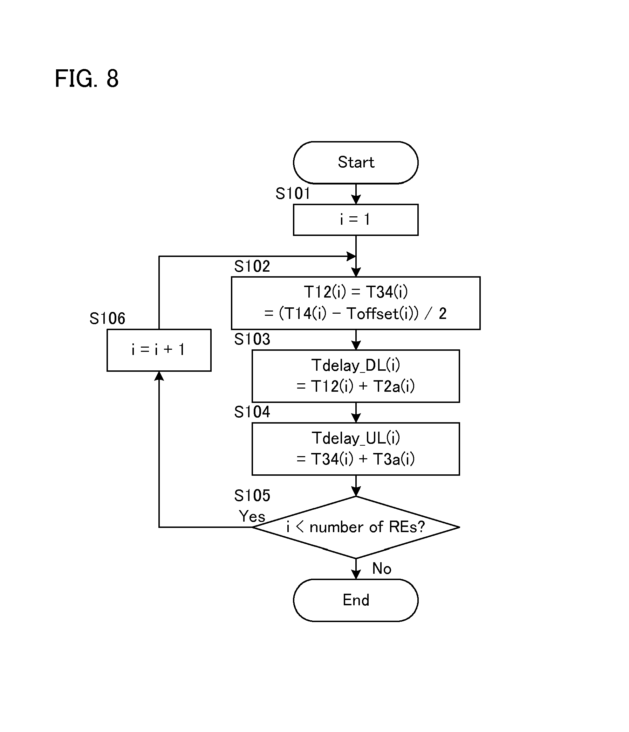

With reference to FIG. 8, the flow of the calculating process of the delay times Tdelay_DL and Tdelay_UL performed by the base station controller 110 will be explained.

FIG. 8 is a flowchart illustrating a flow of a measurement process of the delay times Tdelay_DL and Tdelay_UL.

As illustrated in FIG. 8, the controlling apparatus REC begins the calculation of delay time Tdelay_DL(1) and Tdelay_UL(1) corresponding to the wireless device RE(1) by setting variable i as 1 (Step S101).

Firstly, the controlling apparatus REC calculates the delay times T12 and T34 based on the equation mentioned above(Step S102). Next, the controlling apparatus REC calculates the delay time Tdelay_DL(1) based on the equation mentioned above(Step S103). Next, the controlling apparatus REC calculates the delay time Tdelay_UL(1) based on the equation mentioned above(Step S104).

The controlling apparatus REC compares the value of i with number n of the wireless devices RE connected with the controlling apparatus REC (Step S105), and then in case that the value of i is less than n (Step S106:Yes), the controlling apparatus REC increments the variable i, and then returns to step S102. In the manner explained above, the controlling apparatus REC performs steps S102 through S104 repeatedly for each wireless device RE.

(3) Example of the delay correcting process

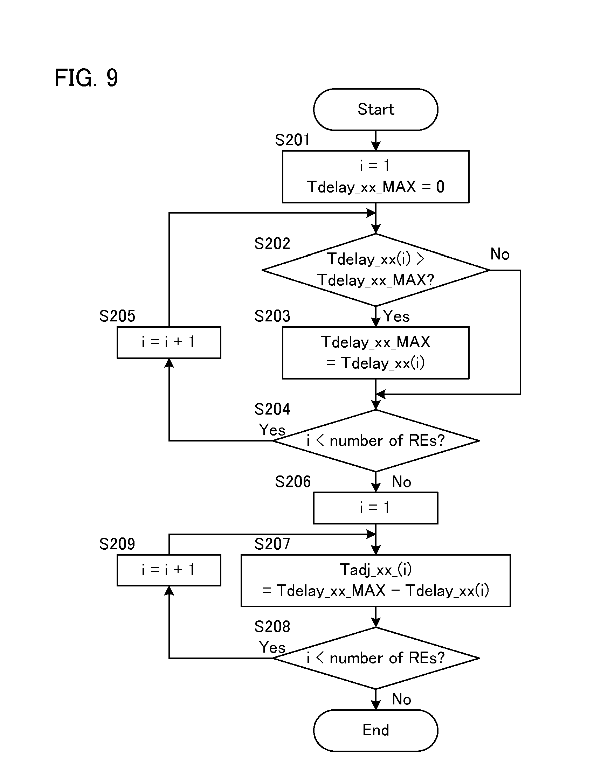

With reference to FIG. 9, the flow of the correcting process of the delay times of the embodiment will be explained. FIG. 9 is a flowchart illustrating a flow of a calculating process of the correction value of the delay times.

In the calculating process of the correction value, the controlling apparatus REC calculates the maximum value Tdelay_DL_MAX of the delay times Tdelay_DL(1) ... Tdelay_DL(n) corresponding to the wireless devices RE(1) ... RE(n). In the same manner, the controlling apparatus REC calculates the maximum value Tdelay_UL_MAX of the delay times Tdelay_UL(1) ... Tdelay_UL(n) corresponding to the wireless devices RE(1) ... RE(n). FIG. 9 illustrates both case of calculating the correcting value for the downlink based on the delay times of the downlink signal, and the correcting value for the uplink based on the delay times of the uplink signal. The figure "xx" in FIG. 9 represents whether the downlink case or the uplink case. When calculating the correcting value for the downlink, "xx" is DL, on the other hand, when calculating the correcting value for the uplink, "xx" is UL.

Firstly, the controlling apparatus REC sets variable i as 1 and an initial value of Tdelay_DL_MAX as 0 (step S201).

Next, the controlling apparatus REC compares the value of Tdelay_DL_MAX with the value of Tdelay_DL(i) corresponding to the wireless device RE(i) (step S202). When the value of Tdelay_DL(i) is larger than the value of Tdelay_DL_MAX, the controlling apparatus REC replaces the value of Tdelay_DL_MAX with the value of Tdelay_DL(i) (Step S203).

Then the controlling apparatus REC compares the value of i with number n of the wireless devices RE connected with the controlling apparatus REC (Step S204), and then in case that the value of i is less than n (Step S204:Yes), the controlling apparatus REC increments the variable i (Step S205), and then returns to step S202. In the manner explained above, the controlling apparatus REC performs steps S202 through S204 repeatedly for each wireless device RE.

After the comparison of the values of Tdelay_DL(i) for each wireless device RE is performed, the controlling apparatus REC set variable i as 1 again(step S206). Then, the controlling apparatus REC calculates the delay correction value Tadj_DL(i) corresponding to each wireless device RE(i) as a difference between Tdelay_DL(i) corresponding to each wireless device RE(i) and the maximum value Tdelay_DL_MAX of the delay time Tdelay_DL (step S207).

Then the controlling apparatus REC compares the value of i with number n of the wireless devices RE connected with the controlling apparatus REC (Step S208), and then in case that the value of i is less than n (Step S208:Yes), the controlling apparatus REC increments the variable i (Step S209), and then returns to step S207. In the manner explained above, the controlling apparatus REC performs step S207 repeatedly for each wireless device RE. After delay correction value Tadj_DL is calculated for all of the wireless devices RE, the controlling apparatus REC ends the calculation process.

In specifically, the calculation process explained above is commonly performed by the base station controller 110 of base station device 1 in this embodiment. As illustrated in the sequence diagram of FIG.

2, the calculated correction values of the delay times Tadj_DL and Tadj_UL are transmitted from the base station controller 110 to the downlink delay corrector 108 or the uplink delay corrector 107 through the IF controller 106. The downlink delay corrector 108 arranges the frame timings among the wireless devices RE by delaying the data of the downlink baseband signals according to the correction value of the delay time Tadj_DL. In the same manner, the uplink delay corrector 107 arranges the frame timings among the wireless devices RE by delaying the data of the uplink baseband signals according to the correction value of the delay time Tadj_DL.

(4) Example of the split delay correction process

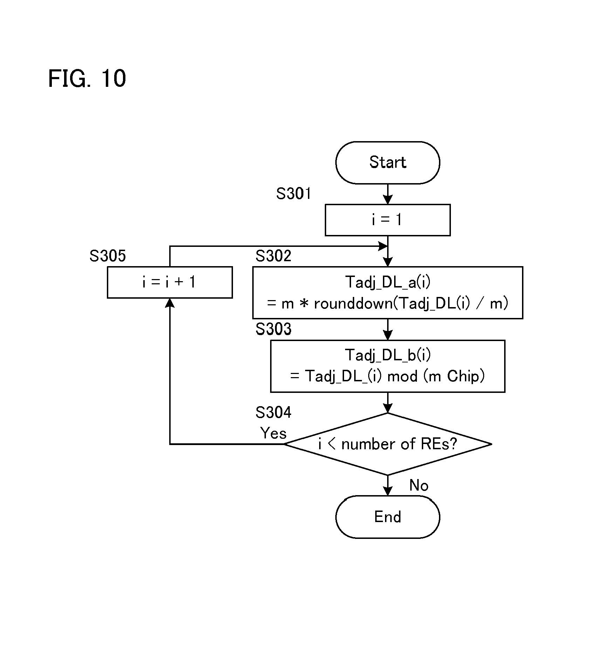

With reference to FIG. 10, the flow of the split correction process for correcting the delay time by using the split correction values split according to the unit of the correction, will be explained. In the split correction process, a first correction value Tadj_DL_a for correcting by a predefined chip unit and a second correction value Tadj_DL_b for correcting by a unit smaller than the predefined chip unit are calculated as the downlink delay correction value Tadj_DL, according to the measured delay times. In this case, the predefined chip unit means the threshold delay time for splitting the correction value, such as one chip or several chips. In the following explanation, the process will be explained by assuming the number of the predefined chip unit as m.

In the split correction process, the base station controller 110 of the controlling apparatus REC splits the downlink delay correction value Tadj_DL into a first correction value Tadj_DL_a for correcting in the controlling apparatus REC by unit of m chips and a second correction value Tadj_DL_b for correcting in the wireless devices RE(1) ... RE(n) by a unit smaller than the m chips.

With reference to FIG. 10, the flow of the split correction process performed by the base station controller 110 will be explained. Firstly, the base station controller 110 sets variable i as 1 (step S301).

Next, the base station controller 110 obtains the first correction value Tadj_DL_a by dividing Tadj_DL(i) by m, truncating decimal numbers of the result and multiplying the result by m (Step S302).

Moreover, the base station controller 110 obtains the second correction value Tadj_DL_b by extracting the remainder of

Tadj_DL(i) divided by m (Step S303).

Next, the base station controller 110 compares the value of i with number n of the wireless devices RE connected with the controlling apparatus REC (Step S304). In case that the value of i is less than n (Step S304:Yes), the base station controller 110 increments the variable i (Step S305), and then performs steps S302 through S303 repeatedly for each wireless device RE.

Calculated first correction value Tadj_DL_a and second correction value Tadj_DL_b are transmitted from the base station controller 110 to the IF controller 106.

The IF controller 106 transmits the first correction value Tadj_DL_a to the downlink delay corrector 108 and the second correction value Tadj_DL_b to the clock controller 102.

The downlink delay corrector 108 arranges the frame timing among the wireless devices RE(1) ... RE(n) by unit of m chips, by delaying the data of the downlink baseband signal according to the received first correction value Tadj_DL_a.

On the other hand, the clock controller 102 arranges the clock timing in order to making the timing the framer 101 transmits differs from the standard timing generated by the clock generator 140 by the second correction value Tadj_DL_b.

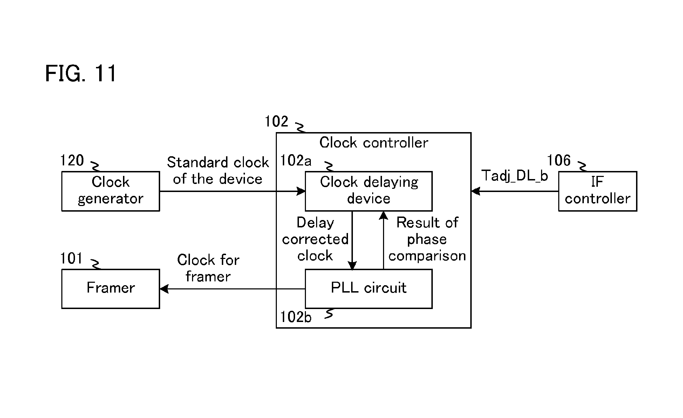

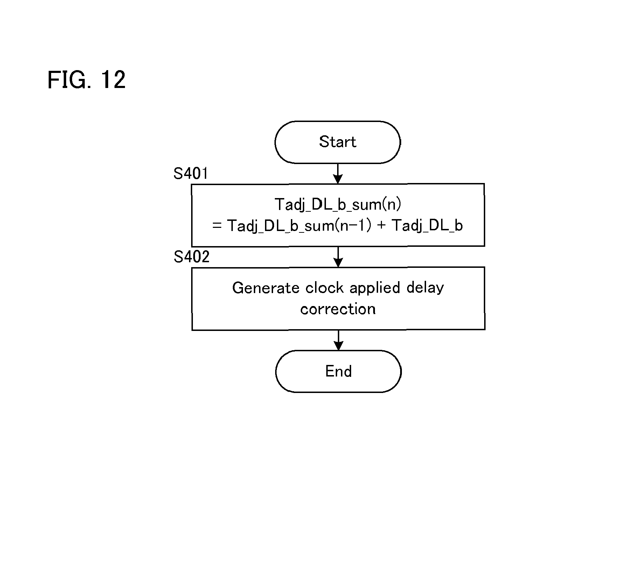

With reference to FIG. 11 and FIG. 12, the operations performed by devices of the base station 1 relating to the process of the clock timing adjustment will be explained.

FIG. 11 is a configuration diagram illustrating the structure of the clock controller 102 and neighboring devices and signals transmitted by such devices. FIG. 12 is a flowchart illustrating a flow of a timing adjustment process performed by the clock controller 102.

As illustrated in FIG. 11, the clock controller 102 is provided with a clock delaying device 102a and PLL (phase locked loop) circuit 102b.

The clock delaying device 102a calculates the Tadj_DL_b_sum(n) which is the correction value used for the n-th timing adjusting process which is the n-th since the base station 1 is activated. The clock delaying device 102a obtains the Tadj_DL_b_sum(n) by adding Tadj_DL_b transmitted by the IF controller 106 to the correction value used for the last (i.e. (n-1)-th) timing adjusting process Tadj_DL_b_sum(n-1) (Figure 12; Step S401). By this, the value of Tadj_DL_b_sum(n-1) is obtained as 0, in case that the timing adjusting process has not been performed after the base station 1 is activated.

Next, the clock delaying device 102a generates a delay corrected clock by shifting the phase of the standard clock of the device transmitted from the clock generator 140 by the calculated correction value Tadj_DL_b_sum(n). And the clock delaying device 102a inputs the generated delay corrected clock to the PLL circuit 102b (Figure 12; step S402). The PLL circuit 102b generates the clock for the framer according to the input clock. In the embodiment, the PLL circuit 102b generates a delay corrected clock for the framer by according to the delay corrected clock input from the clock delaying device 102a. The PLL circuit 102b input the generated delay corrected clock for the framer to the framer 101.

The framer 101 can correct transmitting timings according to the delay corrected clock for the framer. Since each of the wireless devices RE(1) ... RE(n) extracts the clock from the CPRI frames, when timing adjusting process of the clock is performed in the controlling apparatus REC, the instantaneous interruption of the signal doesn't happen.

Depending on the configuration of the PLL circuit 102b and the value of input $T_{adj\_DL\_b}$, the clock signal becomes unstable occasionally. To avoid such unstable situation, the PLL circuit 102b may perform the timing adjusting process in several separated processes by splitting the correcting value $T_{adj\_DL\_b}$. It is preferable that whether the timing adjustment process should be separated or not is judged by the characteristics of the PLL circuit 102b such as a cutoff frequency. In case that the separated timing adjusting processes is performed, the clock delaying device 102a preferably confirms the result of comparison of the phases of the clock for the framer generated by the PLL circuit 102b at each separated process performed.

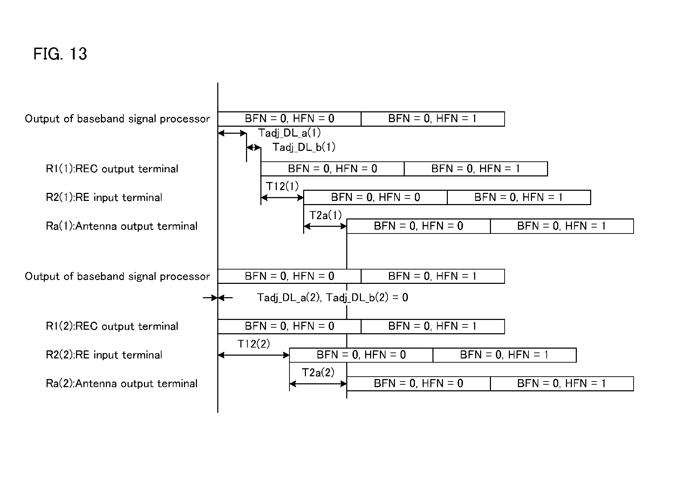

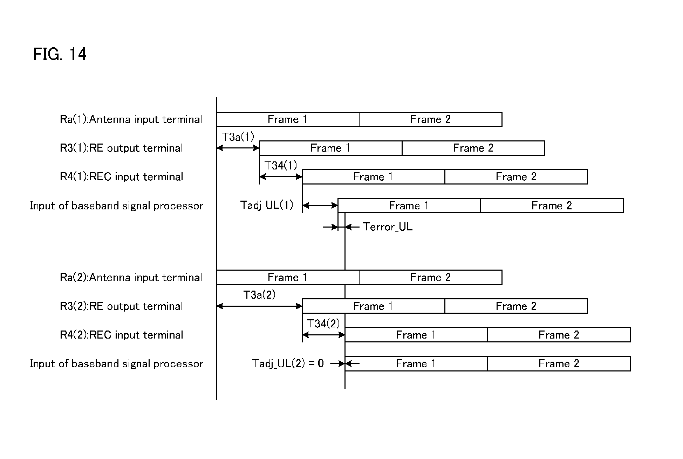

With reference to FIG. 13 and FIG. 14, the relation of the signals when the above-mentioned delay correction process is performed will be explained. FIG. 13 is a diagram illustrating relationship of frame timings of the downlink signals in case that the above-mentioned delay correction process is performed. FIG. 14 is a diagram illustrating relationship of frame timings of the uplink signals in case that the above-mentioned delay correction process is performed.

In FIG. 13 and FIG. 14, the same description for the measurement points of the delay times, as illustrated in FIG. 4 is used.

In the example illustrated in FIG. 13, the delay time of the first wireless device RE(1) to the delay time of the second wireless device RE(2), since the delay time of the second wireless device RE(2) is relatively longer. By this, in the example, the delay correction value $T_{adj\_DL\_a}(2) + T_{adj\_DL\_b}(2)$ for correcting delay times in the second wireless device RE(2) is assumed as 0. On the other hand, the delay correction value $T_{adj\_DL\_a}(1) + T_{adj\_DL\_b}(1)$ for correcting delay times in the first wireless device RE(1) is calculated by the manner explained above. The delay time correction process is performed by using the delay correction value $T_{adj\_DL\_a}(1) + T_{adj\_DL\_b}(1)$.

In the example illustrated in FIG. 14, the delay time correction process is performed by adjusting delay time of the first wireless device RE(1) to the delay time of the second wireless device RE(2), since the delay time of the second wireless device RE(2) is relatively longer, same as the example illustrated in FIG. 13. By this, the delay correction value $T_{adj\_UL}(2)$ for correcting delay times in the second wireless device RE(2) is assumed as 0. On the other hand, the delay correction value $T_{adj\_UL}(1)$ for correcting delay times in the first wireless device RE(1) is calculated by the manner explained above. The delay time correction process is performed by using the delay correction value $T_{adj\_UL}(1)$.

As illustrated in FIG. 13, the remaining error between the frame timings in the antenna output terminal Ra(1) and Ra(2) is defined as $T_{error\_DL}$. As illustrated in FIG. 14, the remaining error between the baseband signal processor input terminal of the wireless device RE (1) and the wireless device RE(2) is defined as $T_{error\_}$

UL. Moreover, the delay in controlling apparatus REC is assumed to be 0 in the example illustrated in FIG. 13 and FIG. 14.

According to the above explained split correction process, the delay correcting process of the downlink signal is performed by only using the internal functions of the controlling apparatus REC. By this, the delay correcting process can be performed with high accuracy depends on the accuracy of the internal clock. As a result, the remaining error Terror of the downlink signal can be made relatively smaller. And complication of the sequence of each devices relating to the delay correcting process can be suppressed.

In the delay correcting process of the uplink signal, the uplink signal processor 202 generates the CPRI frame by the unit of 1 chip (260.42ns) or m chips (m * 260.42ns), according to the specification of CPRI. Therefore, the delay correcting process using $T_{adj\_UL}$ is per-formed by the unit of 1 chip or the unit of m chip.

In the split correcting process explained above, the delay correcting process for correcting by the unit of m chips or more is performed on the IQ data in the CPRI frame structure. On the other hand, the delay correcting process for correcting by the unit of less than m chips is performed by the operation of the clock controller 102.

However, the entire delay correcting process may be performed by the operation of the clock controller 102, regardless of unit for the correcting process.

(5) Second Embodiment

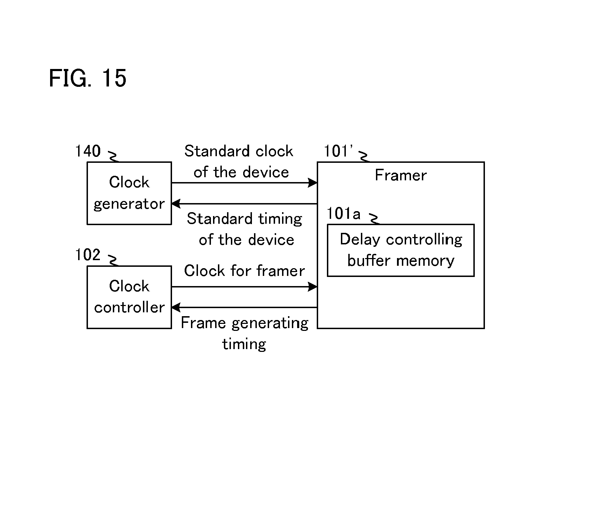

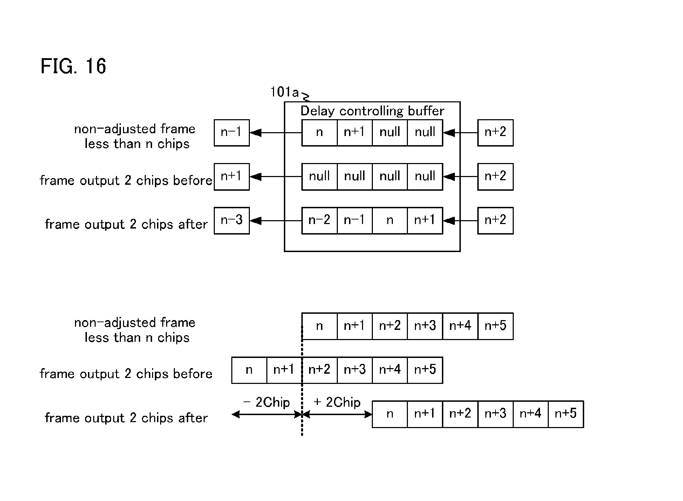

With reference to FIG. 15 and FIG. 16, a structure of the base station of a second embodiment and its operation will be explained. The base station of the second embodiment is provided with a framer 101' including a delay controlling buffer memory 101a, instead of the framer 101 the controlling apparatus REC of the first embodiment equips. FIG. 15 is a configuration diagram illustrating the structure of the controlling apparatus REC of the second embodiment, provided with the framer 101'. FIG. 16 is a configuration diagram illustrating the structure of the delay controlling buffer memory 101a and the buffering process performed by the delay controlling buffer memory 101a.

The delay controlling buffer memory 101a is designed to be able to adjust the frame timing for the delay correction by the unit of 1 chip or the unit of m chips. Because of the delay control buffer 101a, the framer 101' in the controlling apparatus RE of the second embodiment can respond to the fluctuation of the delay.

FIG. 16 illustrates the structure of the delay controlling buffer memory 101a and a conceptual diagram of the operation of the delay control buffer 101a. The delay controlling buffer memory 101a is a FIFO type buffer with a predefined buffer memory size depending on the adjustable range for adjusting the frame timing. For example, the delay controlling buffer memory 101a illus-trated in FIG. 16 has 2 chips of adjustable range for adjusting the frame timing. In case of this, the buffer memory size of the delay controlling buffer memory 101a is configured as 4 chips.

Data writing to the delay controlling buffer memory 101a is performed according to the standard clock of the device input from the clock generator 140. On the other hand, data reading from the delay controlling buffer memory 101 a is performed according to the clock for the framer input from the clock controller 102. Therefore, the timing for data reading from the delay controlling buffer memory 101a can be adjusted by changing the clock for the framer. For example, the delay controlling buffer memory 101a performs buffering process of the adjustable range of 2 chips, in case that the clock controller 102 does not perform the adjustment of the timing, in other words, in case that the standard timing of the device is synchronous with the timing of the frame generation.

Because the delay controlling buffer memory 101a can output the frame 2 chips before the outputting timing of the non-adjusted frame, the delay controlling buffer memory 101a can avoid instantaneous interruption of the data within 2 chips. Because the delay controlling buffer memory 101a can output the frame 2 chips after the outputting timing of the non-adjusted frame, the delay controlling buffer memory 101a can avoid data missing within 2 chips. As described above, the delay controlling buffer memory 101 a can adjust the frame timing without instantaneous interruption of the data being occurred.

As explained above, the adjustable range of the timing is determined by the buffer memory size of the delay controlling buffer memory 101 a. Therefore, the larger buffer memory is applied, the longer range of the timing can be adjusted.

The fluctuation of the delay times typically caused only by the temperature changes in the optical cable and the fluctuation of the delay in the transponder. The optical cable of common CPRI is generally known as several ten kilometers, and the range of the fluctuation of the delay caused by the temperature changes in the optical cable is known as 1 nano-second per 1 kilometer. Therefore, the fluctuation of the delay times can be treated as the fluctuation of the delay in the transponder plus several nano-seconds. The delay controlling buffer memory 101a can adequately manages the delay correcting process for such the fluctuation of the delay times.

(6) Third Embodiment

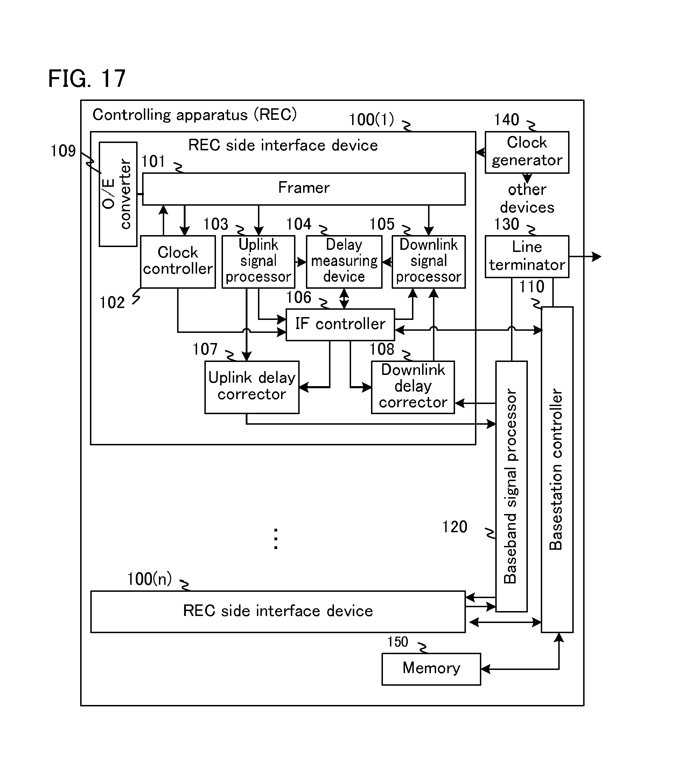

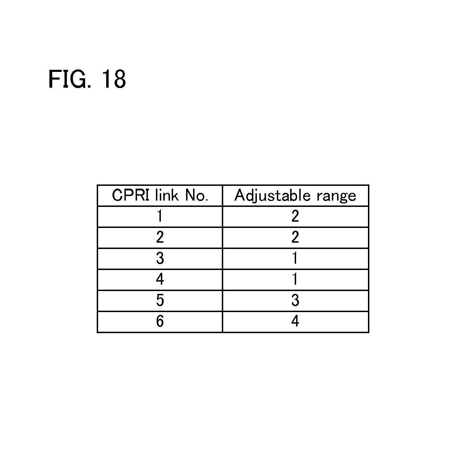

With reference to FIG. 17 and FIG. 18, a structure of the base station of a third embodiment and its operation will be explained. The base station of the third embodiment is provided with a controlling apparatus REC' further including a memory 150 comparing to the controlling apparatus REC.

FIG. 17 is a configuration diagram illustrating an example of the structure of the controlling apparatus REC of the third embodiment.

The controlling apparatus REC' can specify the adjustable range of the timing in the clock controller 102 of the interface device 100.

In the third embodiment, the memory 150 of the controlling apparatus REC' can store the specified adjustable range. The base station controller 110 reads the stored adjustable range when the controlling apparatus activates.

The memory 150 may store the specified adjustable range in a table form distinguished by a CPRI link as illustrated in FIG. 18. For instance, the value of the stored adjustable range may be rewritable by other devices such as the higher-level device.

The clock controller 102 commonly performs the timing adjustment process spending more time when the adjustable range becomes larger. The range of the fluctuation of the delay may vary by the CPRI link, because the fluctuation of the delay varies depending upon the length of the optical cable and the fluctuation in the transponder, as mentioned above. On the other hand, in the third embodiment, the controlling apparatus REC' can specify the adjustable range for each CPRI link. Therefore, the controlling apparatus REC' can optimize the timing adjusting processes for each CPRI link.

Moreover, since above mentioned operation can be performed easily by using memory 150, the controlling apparatus REC' can easily improve the stability of the operation without complicating the circuit configuration in the controlling apparatus REC'.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

**Claims**

1. A controlling apparatus installed in a base station with a plurality of wireless devices, for controlling operations of said plurality of wireless devices, said controlling apparatus comprising:

    an interface device for transmitting and receiving data with at least one of said plurality of wireless devices according to timing provided by an internal clock,
    a measurement device for measuring the delay times corresponding to the transmission and the reception of the data between the interface device and said plurality of wireless devices, and
a correction device for correcting a difference of
the delay times corresponding to said plurality
of wireless devices by changing the internal
clock.

2. The controlling apparatus according to claim 1, wherein
the correction device corrects the difference of the delay times by delaying the baseband signal block in the frame of the data instead of changing the internal clock of the interface device, in case that the difference of the delay times is more than a predetermined threshold value.

3. The controlling apparatus according to claim 1, further comprising:

a buffer memory for storing the data, wherein the correction device corrects the difference of the delay times while storing the data in the buffer memory when the difference of the delay times is less than the predetermined threshold value.

4. The controlling apparatus according to claim 3, wherein
the predetermined threshold value is determined based on the memory size of the memory buffer.

5. The controlling apparatus according to claim 1, wherein
the correction device is capable of adjustment of the correctable range for correcting the differences of the delay times.

6. The controlling apparatus according to claim 1, wherein
the correction device corrects the difference of the delay times between the interface device and said plurality of wireless devices individually.

7. A controlling method for controlling operations of a plurality of wireless devices installed in a base station, said controlling method comprising:

measuring the delay times corresponding to transmission and reception of the data between a interface device for transmitting and receiving data with at least one of said plurality of wireless devices according to timing provided by an internal clock and said plurality of wireless devices, and
correcting a difference of the delay times corresponding to said plurality of wireless devices by changing the internal clock.

8. A base station provided with a plurality of wireless devices and a controlling apparatus for controlling operations of said plurality of wireless devices, comprising:

an interface device for transmitting and receiving data with at least one of said plurality of wireless devices according to timing provided by an internal clock,
a measurement device for measuring the delay times corresponding to the transmission and the reception of the data between the interface device and said plurality of wireless devices, and
a correction device for correcting a difference of the delay times by changing the internal clock.

FIG. 1

FIG. 2

FIG. 3

1 / 3.84 MHz

| W = | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| B = 0 | | | | | | | | | | | | | | | | |
| B = 1 | | | | | | | | | | | | | | | | |
| B = 2 | | | | | | | | | | | | | | | | |
| B = 3 | | | | | | | | | | | | | | | | |
| B = 4 | | | | | | | | | | | | | | | | |
| B = 5 | | | | | | | | | | | | | | | | |
| B = 6 | | | | | | | | | | | | | | | | |
| B = 7 | | | | | | | | | | | | | | | | |
| B = 8 | | | | | | | | | | | | | | | | |
| B = 9 | | | | | | | | | | | | | | | | |
| B = 10 | | | | | | | | | | | | | | | | |
| B = 11 | | | | | | | | | | | | | | | | |
| B = 12 | | | | | | | | | | | | | | | | |
| B = 13 | | | | | | | | | | | | | | | | |
| B = 14 | | | | | | | | | | | | | | | | |
| B = 15 | | | | | | | | | | | | | | | | |

BYTE #Z, X, 0

BYTE #Z, X, 1

IQ data block

Control Word

FIG. 4

FIG. 5

| | | |
|---|---|---|
| R1:REC output terminal | BFN = 0, HFN = 0 | BFN = 0, HFN = 1 |
| R2:RE input terminal | T12 BFN = 0, HFN = 0 | BFN = 0, HFN = 1 |
| R3:RE output terminal | Toffset BFN = 0, HFN = 0 | BFN = 0, HFN = 1 |
| R4:REC input terminal | T34 BFN = 0, HFN = 0 | BFN = 0, HFN = 1 |
| | T14 | |

FIG. 6

| | | |
|---|---|---|
| R1(1):REC output terminal | BFN = 0, HFN = 0 | BFN = 0, HFN = 1 |

T12(1)

| | | |
|---|---|---|
| R2(1):RE input terminal | BFN = 0, HFN = 0 | BFN = 0, HFN = 1 |

T2a(1)

| | | |
|---|---|---|
| Ra(1):Antenna output terminal | BFN = 0, HFN = 0 | BFN = 0, HFN = 1 |

Tadj_DL

| | | |
|---|---|---|
| R1(2):REC output terminal | BFN = 0, HFN = 0 | BFN = 0, HFN = 1 |

T12(2)

| | | |
|---|---|---|
| R2(2):RE input terminal | BFN = 0, HFN = 0 | BFN = 0, HFN = 1 |

T2a(2)

| | | |
|---|---|---|
| Ra(2):Antenna output terminal | BFN = 0, HFN = 0 | BFN = 0, HFN = 1 |

FIG. 7

| | | | |
|---|---|---|---|
| Ra(1):Antenna input terminal | | Frame 1 | Frame 2 |
| R2(1):RE output terminal | T3a(1) | Frame 1 | Frame 2 |
| R1(1):REC input terminal | T34(1) | Frame 1 | Frame 2 |
| | | Tadj_UL | |
| Ra(2):Antenna input terminal | | Frame 1 | Frame 2 |
| R2(2):RE output terminal | T3a(2) | Frame 1 | Frame 2 |
| R1(2):REC input terminal | T34(2) | Frame 1 | Frame 2 |

FIG. 8

```
                              ┌──────────────┐
                              │    Start     │
                              └──────┬───────┘
                                     │
S101                          ┌──────▼───────┐
                              │    i = 1     │
                              └──────┬───────┘
                                     │
                     ┌───────────────▼───────────────┐
S102                 │      T12(i) = T34(i)           │
                     │   = (T14(i) − Toffset(i)) / 2  │
                     └───────────────┬───────────────┘
S106                                 │
┌──────────────┐     ┌───────────────▼───────────────┐
│  i = i + 1   │  S103│       Tdelay_DL(i)            │
└──────▲───────┘     │      = T12(i) + T2a(i)         │
       │             └───────────────┬───────────────┘
       │          S104               │
       │             ┌───────────────▼───────────────┐
       │             │       Tdelay_UL(i)            │
       │             │      = T34(i) + T3a(i)         │
       │             └───────────────┬───────────────┘
       │   S105                      │
       │   Yes      ╱────────────────▼────────────────╲
       └───────────◁    i < number of REs?             ▷
                    ╲─────────────────────────────────╱
                                     │ No
                              ┌──────▼───────┐
                              │     End      │
                              └──────────────┘
```

## FIG. 9

Start

S201
$i = 1$
$Tdelay\_xx\_MAX = 0$

S202
$Tdelay\_xx(i) > Tdelay\_xx\_MAX?$ — No

Yes

S203
$Tdelay\_xx\_MAX = Tdelay\_xx(i)$

S205
$i = i + 1$

S204
$i < \text{number of REs?}$ — Yes

No

S206
$i = 1$

S207
$Tadj\_xx\_(i) = Tdelay\_xx\_MAX - Tdelay\_xx(i)$

S209
$i = i + 1$

S208
$i < \text{number of REs?}$ — Yes

No

End

# FIG. 10

Start

S301

i = 1

S305

i = i + 1

S302

Tadj_DL_a(i)
= m * rounddown(Tadj_DL(i) / m)

S303

Tadj_DL_b(i)
= Tadj_DL_(i) mod (m Chip)

S304
Yes

i < number of REs?

No

End

FIG. 11

FIG. 12

Start

S401

$$Tadj\_DL\_b\_sum(n)$$
$$= Tadj\_DL\_b\_sum(n-1) + Tadj\_DL\_b$$

S402

Generate clock applied delay correction

End

FIG. 13

| | | |
|---|---|---|
| Output of baseband signal processor | BFN = 0, HFN = 0 | BFN = 0, HFN = 1 |

Tadj_DL_a(1)

Tadj_DL_b(1)

| | | |
|---|---|---|
| R1(1):REC output terminal | BFN = 0, HFN = 0 | BFN = 0, HFN = 1 |

T12(1)

| | | |
|---|---|---|
| R2(1):RE input terminal | BFN = 0, HFN = 0 | BFN = 0, HFN = 1 |

T2a(1)

| | | |
|---|---|---|
| Ra(1):Antenna output terminal | BFN = 0, HFN = 0 | BFN = 0, HFN = 1 |

| | | |
|---|---|---|
| Output of baseband signal processor | BFN = 0, HFN = 0 | BFN = 0, HFN = 1 |

Tadj_DL_a(2), Tadj_DL_b(2) = 0

| | | |
|---|---|---|
| R1(2):REC output terminal | BFN = 0, HFN = 0 | BFN = 0, HFN = 1 |

T12(2)

| | | |
|---|---|---|
| R2(2):RE input terminal | BFN = 0, HFN = 0 | BFN = 0, HFN = 1 |

T2a(2)

| | | |
|---|---|---|
| Ra(2):Antenna output terminal | BFN = 0, HFN = 0 | BFN = 0, HFN = 1 |

FIG. 14

| | | |
|---|---|---|
| Ra(1):Antenna input terminal | Frame 1 | Frame 2 |
| R3(1):RE output terminal | T3a(1) | Frame 1 | Frame 2 |
| R4(1):REC input terminal | T34(1) | Frame 1 | Frame 2 |
| Input of baseband signal processor | Tadj_UL(1) | Frame 1 | Frame 2 |
| | | ← Terror_UL | |
| Ra(2):Antenna input terminal | Frame 1 | Frame 2 |
| R3(2):RE output terminal | T3a(2) | Frame 1 | Frame 2 |
| R4(2):REC input terminal | T34(2) | Frame 1 | Frame 2 |
| Input of baseband signal processor | Tadj_UL(2) = 0 | Frame 1 | Frame 2 |

FIG. 15

140

Clock
generator

Standard clock
of the device

Standard timing
of the device

102

Clock
controller

Clock for framer

Frame generating
timing

101'

Framer

101a

Delay controlling
buffer memory

FIG. 16

101a

Delay controlling buffer

non-adjusted frame
less than n chips

| n-1 | ← | n | n+1 | null | null | ← | n+2 |

frame output 2 chips before

| n+1 | ← | null | null | null | null | ← | n+2 |

frame output 2 chips after

| n-3 | ← | n-2 | n-1 | n | n+1 | ← | n+2 |

non-adjusted frame
less than n chips

| n | n+1 | n+2 | n+3 | n+4 | n+5 |

frame output 2 chips before

| n | n+1 | n+2 | n+3 | n+4 | n+5 |

frame output 2 chips after

− 2Chip  + 2Chip

| n | n+1 | n+2 | n+3 | n+4 | n+5 |

FIG. 17

FIG. 18

| CPRI link No. | Adjustable range |
|:---:|:---:|
| 1 | 2 |
| 2 | 2 |
| 3 | 1 |
| 4 | 1 |
| 5 | 3 |
| 6 | 4 |

**EP 2 367 311 A2**

**REFERENCES CITED IN THE DESCRIPTION**

**Patent documents cited in the description**

- JP 2007507957 A